# EUROPEAN PATENT APPLICATION

(11) **EP 4 772 372 A1**
(43) Date of publication of application: **08.07.2026**
(21) Application number: 25155095.0
(22) Date of filing: 30.01.2025
(51) Int. Cl.: B60K 1/04, B60L 50/64, H01M 50/224, H01M 50/242, H01M 50/249

(54) **BATTERY HOLDER AND BATTERY FOR TRANSPORT VEHICLE**

(71) Applicant: Constellium UK Limited, Burnham, SL1 8DF (GB)
(72) Inventor: BEN TAHAR, Mehdi, 38000 GRENOBLE (FR); ROW, Andrew, BURNHAM, SL1 8DF (GB); CULLEN, Jenson, NAPTON ON THE HILL, CV47 8LT (GB); EDEN, James, ROYAL LEAMINGTON Spa, CV31 2RU (GB); LEWIS, Daniel, BISHOPS TACHBROOK, CV33 9FP (GB)
(74) Representative: Constellium - Propriété Industrielle

(57) **Abstract**

The invention concerns a battery holder (1) for a transport vehicle, the battery holder (1) comprising the successive stacking in this order of: a floor (5), at least two frames (3) and a lid (2); the floor (5), the at least two frames (3) and the lid (2) delimiting between them a housing (4) intended to receive battery modules (7) ; each frame (3) of the at least two frames (3) being fixedly attached to each adjacent frame (3) by a structural adhesive (9), said structural adhesive (9) being interposed between two adjacent frames (3) and configured to ensure mechanical fastening between said frames (3).

The invention also concerns a battery (100) comprising such a battery holder (1).

## Description

### TECHNICAL FIELD OF THE INVENTION

This invention relates to the field of electric or hybrid motorized transport vehicle, and more particularly to a battery holder intended to receive all or part of a battery to be supported by the battery holder.

### BACKGROUND

The state of the art described below presents applications in the field of electric or hybrid vehicles, but it could also relate to other fields or applications requiring the use of a battery holder.

It is known from the state of the art to use a battery enclosure presenting a structural frame designed to support the battery, and eventually to protect the battery cells or modules from damages in the event of side impact, or shock and from environmental ingresses. Said battery enclosure generally comprises the following elements:
- a circumferential structural frame usually fastened into the vehicle body structure using a bolting system.
- a floor closing the bottom of the frame and configured to receive all or part of the battery cells or modules
- a lid made of plastic, steel or aluminum and placed on top of the above structure to seal completely the battery enclosure.

The role of said enclosure is to hold and protect the cells or the modules of the battery. However, depending on the needs, and depending on the type of battery cells or modules intended to be held by the battery holder, the shape for the overall structure of the frame can change drastically. Indeed, the battery system for an electric vehicle is built by a combination of individual cells. Generally, there are three main cell types, which can determine the geometry, the size, the range as well as the vulnerability of the energy storage system. Consequently, the type of cells selected will influence the final design and shape of the battery enclosures. Besides, depending on the type of transport vehicle, the space available to store the battery cells or modules can have very different shapes.

A first main characteristic that a battery enclosure needs to be, is sufficiently robust to reduce the chances of deforming when the vehicle is involved in an accident that can damage battery cells. Forthis reason, the battery enclosure must have sufficient strength in order to reduce the chances of damaging internals of the enclosure, which could eventually cause serious damage to the vehicle and its surroundings.

A second primordial characteristic is that a battery enclosure must meet standards which are mandatory, such as leak tightness. That is to say that no water or any other debris must penetrate the battery enclosure. A key parameter allowing to meet this requirement is to ensure a battery enclosure showing good flatness, especially to seal the lid on top of the above structure of the battery enclosure. However, when assembling the frame parts constituting the frame, it is needed to use joining means such as fastening, or welding. Those joining means can generate distortion in the frame structure and induce slight irregularities in the flatness of the frame as well as increase the manufacturing cost

Consequently, a battery holder must be impact-resistant, watertight and adaptable to the dimensions of the space available in the vehicle. These requirements are particularly difficult to meet in the case of battery holders for heavy vehicles, which need to carry a large battery capacity in spaces extending vertically.

A prior art solution consists in superimposing battery holder frames that enclose the battery modules. Although this solution is satisfactory in that it enables a large storage capacity to be accommodated in a volume in height, it rises problematics towards holding the modules in the battery holder, and preventing shocks between the modules.

Document US20230223636A1 shows a battery holder comprising frames stacked one above the other in a stacking direction. Each frame comprises a top and a bottom flange comprising bores for screwing stacked frames with each other. This solution allows to assemble a battery holder including a stack of frame with a reduced number of screws. However, the presence of the flanges may increase the total weight of the battery holder.

Document EP4177092A1 shows a similar solution, where the fixation of the adjacent frames is performed via through holes provided directly on the structure of the stacked frames. Thus, each frame is fixedly attached to the entirety of the battery holder. Such battery holder should present improved mechanical strength due to the number of screws used in the assembly. However, the fixation step duration is increased by the number of screws, along with the weight of the battery holder.

Document US2019/0312244A1 shows a third solution, wherein the frames may be nested within each other, and screws may be used to secure the whole assembly. Optionally, a joint may be used to ensure fluid tightness between each stage of the stack. However, there is no solution to ensure a fixation between each stage, which may generate problems of water tightness and mechanical resistance at the interfaces between the stacked frames.

There is therefore a need to find a solution for holding battery modules in a high volume, while guaranteeing good mechanical strength and tightness of the battery holder.

### SUMMARY OF THE INVENTION

The present invention aims at solving the aforementioned problems. To this end, the invention concerns a battery holder for a transport vehicle, the battery holder comprising the successive stacking in this order of: a floor, at least two frames and a lid; the floor, the at least two frames and the lid delimiting between them a housing intended to receive battery modules ; each frame of the at least two frames being fixedly attached to each adjacent frame by a structural adhesive, said structural adhesive being interposed between two adjacent frames and configured to ensure mechanical fastening between said frames.

The arrangements described above make it possible to provide a battery holder wherein each frame supports a dedicated number of battery cells or modules, and is fixedly attached to adjacent frames by the structural adhesive. The structural adhesive is therefore used both to ensure a mechanical strength of the battery holder, and to ensure fluid tightness between each stacked frames. Thus, using a structural adhesive allows to reduce the need of mechanical fasteners such as bolts which in turn reduces the manufacturing cost.

Generally, by "structural adhesive", it is meant an adhesive, which presents a lap shear strength that is above 1000 pounds-force per square inch, or above 7 MPa. A structural adhesive shows good durability under operating environment. Examples of structural adhesives are epoxies, acrylics, and polyurethane adhesives.

According to an embodiment, the battery holder comprises on or more of the following features, taken alone or in combination.

According to one embodiment, each frame of the at least two frames has a closed shape comprising a first corner and a second corner, said frame comprising:
- a main frame part formed in one piece, and extending along a bending curve between a first end and a second end, said bending curve comprising a first curved portion disposed between the first end and the second end; and
- a closing frame part distinct from the main frame part, and extending along a lateral direction between a primary end portion and a secondary end portion, the closing frame part presenting externally a cooperation surface;
the first end of the main frame part leaning on the cooperation surface and being secured to the cooperation surface at the primary end portion of the closing frame part so as to form the first corner of the closed shape of the frame, and the second end of the main frame part leaning on the cooperation surface and being secured to the cooperation surface of the closing frame part at the secondary end portion so as to form the second corner of the closed shape of the frame, the arrangement constituted by the main frame part and the closing frame part assembled together forming said closed shape of the frame.

The arrangements described above make it possible to provide a battery holder with a closed shape with the use of two frame parts. Besides, the main frame part being formed in one piece allows to limit the number of joining points between different frame parts. Finally, assembling the frame by securing the main frame part on the cooperation surface of the closing frame part allows to form the first corner and the second corner of the frame in order to keep enough space able to receive a larger amount of battery cells or modules.

Synergistically, reducing the number of welded corner by using a U shape for the main frame part allows to improve fluid tightness inside each stage and between each stage of stacked frames.

It is well understood that the frame is assembled by joining the main frame part and the closing frame part at the first corner and at the second corner.

According to one embodiment, one of the frames comprises an external profile disposed opposite to the floor compared to said one frame, said external profile being intended to connect the battery holder to the vehicle and/or to absorb all or part of impact energy by an external element likely to be applied to the battery holder.

The arrangements described above allows to protect the battery modules or cells from impacts and shocks.

According to one embodiment, the at least two frames comprises at least one profile, and more particularly, at least one extruded profile.

The arrangements described above allows to reduce the overall manufacturing cost of the battery holder.

According to one embodiment, said profile comprises aluminum, or aluminum alloy.

Advantageously, using an aluminum profile allows to reduce the overall weight of the battery holder.

According to one embodiment, at least one frame among the at least two frames comprises at least one cross member extending along a lateral direction and securing two opposite sides of said at least one frame.

Thus, it is possible to reinforce the mechanical strength of the battery holder, especially when the housing presents a large area.

According to one embodiment, each frame comprises at least one cross member, and wherein each cross member is arranged in line with a cross member of another frame along a vertical direction, the structural adhesive being disposed between the cross members arranged in line.

Thus, the adhesive is disposed both between the frames, but also between the cross members aligned along the vertical direction.

According to one embodiment, the cross member comprises fixing holes provided through the cross member and configured to allow the fixing of the lid with the floor by fixing rods, through the stacked frames.

Thus, the fixing rods improved the mechanical strength of the battery holder, at the level of the cross members, without compromising sealing performances.

According to one embodiment, the battery holder comprises at least one intermediate floor interposed between two adjacent stacked frames.

By this way, it is possible to secure the battery modules on the intermediate floor, and/or on the frames.

The object of the invention may also be achieved by implementing a battery for a transport vehicle comprising a battery holder as described above, and battery cells or battery modules housed in the housing delimited by the floor, the at least two frames and the lid.

The arrangement described above allows to provide a battery for a transport vehicle showing improved fluid tightness.

According to an embodiment, each frame of the at least two frames supports a part of the battery cells or the battery modules.

By this way, each stage of the stacking of frames may be assembled individually. Thus, battery parts can be assembled when the battery modules are already attached to the frames. The manufacturing costs of the battery are thus reduced.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents schematically an exploded view of a battery holder according to one embodiment of the invention.
Figure 2 represents schematically an exploded view of a battery comprising the battery holder of figure 1.
Figure 3 represents schematically an exploded view of a second embodiment of the battery holder according the invention.
Figure 4 represents schematically a frame according to one embodiment.
Figure 5 represents schematically a frame according to another embodiment.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

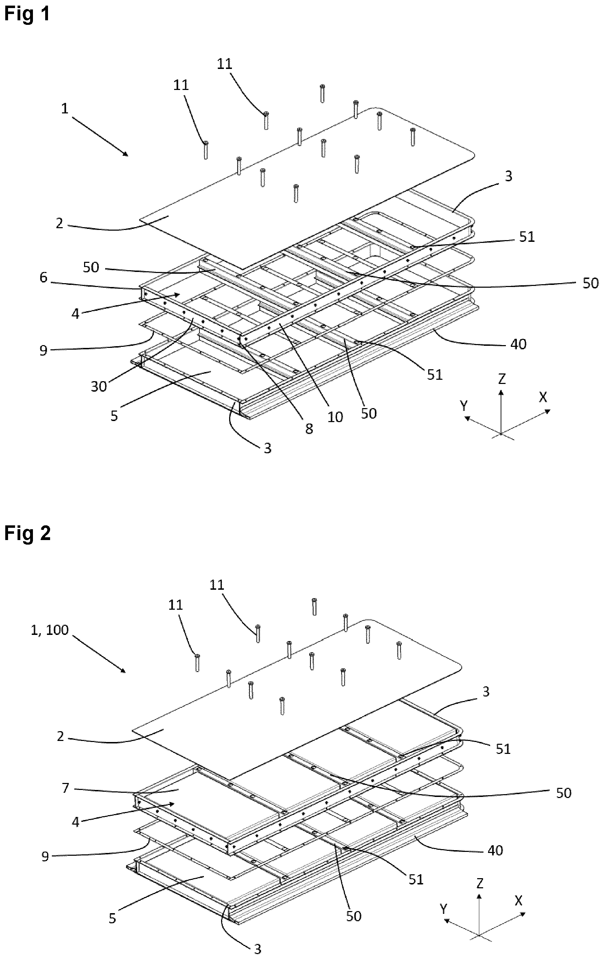

As illustrated on the figures 1 to 3, the invention concerns a battery holder 1 for a transport vehicle. More particularly said transport vehicle may be an electric or hybrid motorized transport vehicle comprising such battery holder 1.

The battery holder 1 comprising the successive stacking in this order of: a floor 5, at least two frames 3 and a lid 2. The floor 5, the at least two frames 3 and the lid 2 delimits between them a housing 4 intended to receive battery modules 7. Generally, the battery modules 7 or the battery cells are fixedly attached on the floor 5, or fixedly attached directly on the frames 3.

It is possible that the stacked frames 3 encircle the floor 5, but more generally, the frames 3 are stacked on top of the floor 5. The lid 40, is generally made of plastic, and connected to the frame 3 disposed at the top of the stack of frames 3 so as to close the housing 4. Advantageously, the lid 40 is sealed to the frame 3 which is disposed at the top of the stacked frames 3, on a side opposite to the floor 5 with respect with the stack of frames 3. For example, the floor 5 and the lid 40 represents two plans separated by the stack of frames 3, the height of the stack of frames 3 defining the height of the housing 4 between the planar floor 5 and the planar lid 40.

According to one embodiment, it is possible to define a spatial reference associated to the battery holder 1, and for example attached to the floor 5. Said spatial reference may comprises following three axes:
- a longitudinal axis called "X", intended to extend longitudinally along the traveling direction of the vehicle;
- a lateral axis called "Y" extending laterally in the plane of the floor 5 and generally perpendicular to the axis X;
- a vertical axis called "Z" extending vertically relative to the plane of the floor 5.

In a first variant illustrated on figures 1 and 2, the battery holder 1 comprises two stacked frames 3, stacked along the vertical axis Z. However, it is possible that the battery holder 1 comprises any number of stacked frames 3 superior to 2, adapted to be accommodated in a dedicated space provided in the vehicle.

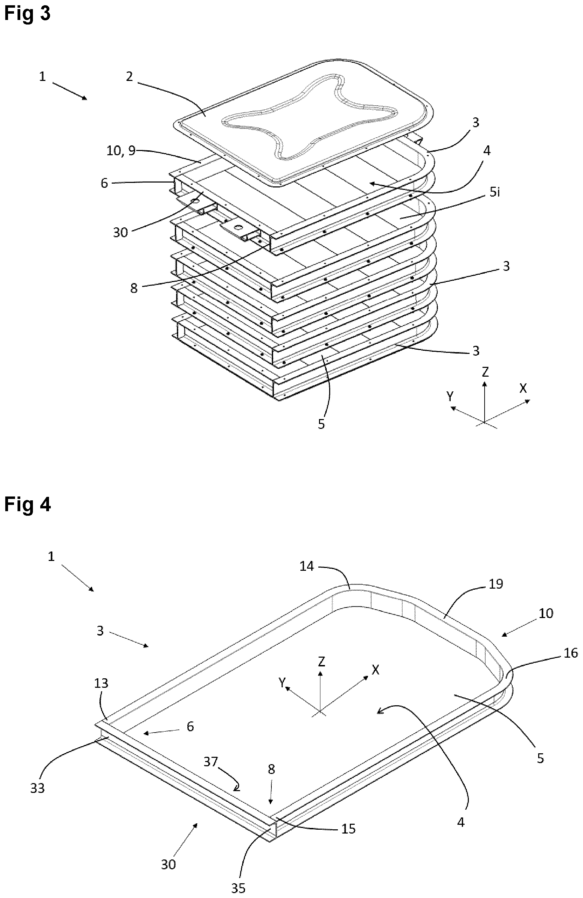

In a second variant illustrated on figure 3, the battery holder comprises five stacked frames 3, and at least one intermediate floor 5i interposed between two adjacent stacked frames 3. By this way, it is possible to secure the battery modules 7 on the intermediate floor 5i, and/or on the frames 3.

As illustrated on the first variant, one or several frames among the stacked frames 3 may comprise at least one cross member 50 extending along a lateral direction Y. Each cross member 50 is securing two opposite sides of one of the frame 3. Thus, it is possible to reinforce the mechanical strength of the battery holder 1, especially when the housing 4 presents a large area. Each cross member 50 may comprise fixing holes 51 provided through the cross member 50 and configured to allow the fixing of the lid 2 with the floor 5 via fixing rods 11, through the stacked frames 3. Thus, the fixing rods 11 may improve the mechanical strength of the battery holder 1, at the level of the cross members 50, without compromising sealing performances.

Regardless of the variant, each frame 3 of the at least two frames 3 is fixedly attached to each adjacent frame 3 by a structural adhesive 9. Said structural adhesive 9 is then interposed between two adjacent frames 3 and configured to ensure mechanical fastening between said frames 3. In figures 1 and 2, the structural adhesive 9 is represented spaced apart the frames, whereas in the figure 3, the structural adhesive 9 already adhere with the frames 3. Generally, by "structural adhesive 9", it is meant an adhesive, which presents a lap shear strength that is above 1000 pounds-force per square inch, or above 7 MPa. A structural adhesive 9 shows good durability under operating environment. Examples of structural adhesives are epoxies, acrylics, and polyurethane adhesives.

When the battery holder 1 comprises at least one cross member 50, each cross member 50 may be arranged in line with a cross member 50 of another frame 3 along the vertical direction Z. Thus, the structural adhesive 9 can be disposed between the cross members 50 arranged in line. In other words, the adhesive is disposed both between the frames 3, but also between the cross members 50 aligned along the vertical direction.

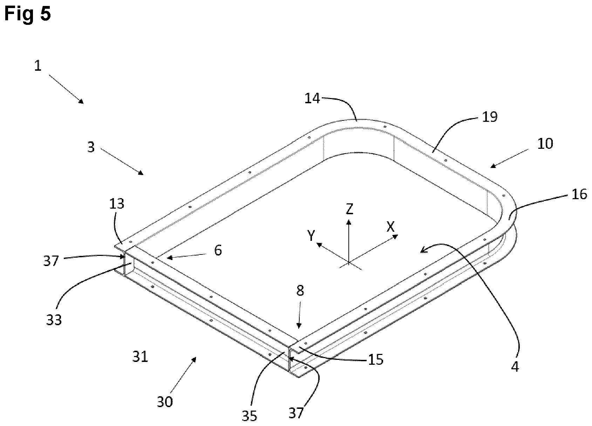

According to one embodiment, each frame 3 may present a closed shape comprising a first corner 6 and a second corner 8. An example of such frame 3 is illustrated on figures 4 and 5. In that case, the frame 3 may first comprise a main frame part 10 formed in one piece, and extending along a bending curve between a first end 13 and a second end 15, and a closing frame part 30 distinct from the main frame part 10, and extending along a lateral direction Y between a primary end portion 33 and a secondary end portion 35. The closing frame part 30 presents externally a cooperation surface 37 (figure 4) or a pair of opposite cooperation surfaces 37 (figures). The bending curve of the main frame part 10 comprises a first curved portion 14 disposed between the first end 13 and the second end 15. Optionally, the bending curve may comprise a second curved portion 16 distinct from the first curved portion 14.

The first and second curved portion 14, 16 may be oriented so that the main frame part 10 presents a concave shape, said concave shape presenting a concavity directed towards the closing frame part 30. By "concave shape" related to the main frame part 10, it is meant that said main frame part 10 is curved and that the apex of the curvature belongs to a plane from which the main frame part 10 moves away in the direction of the closing frame part 30.

As illustrated in figure 5, the first curved portion 14 and the second curved portion 16 may be linked with each other by a straight portion 19 of the main frame part 10, in a way that the bending curve presents a U shape. Figure 4 represents a particular embodiment wherein the main frame part 10 comprises four different curved portions linked with each other by straight portions 19 to form the U shape of the main frame part 10. Advantageously, said U shape helps to provide a flatter frame 3. This configuration allows to solve part of the sealing issues of the battery holder 1.

The closed shape of the frame 3 is formed when the first end 13 of the main frame part 10 leans on the cooperation surface 37 and is secured to the cooperation surface 37 at the primary end portion 33 of the closing frame part 30 so as to form the first corner 6 of the closed shape of the frame 3, and when the second end 15 of the main frame part 10 leans on the cooperation surface 37 and is secured to the cooperation surface 37 of the closing frame part 30 at the secondary end portion 35 so as to form the second corner 8 of the closed shape of the frame 3. Thus, the arrangement constituted by the main frame part 10 and the closing frame part 30 assembled together forming said closed shape of the frame 3.

The arrangements described above make it possible to provide a battery holder 1 with a closed shape with the use of two frame parts. Besides, the main frame part 10 being formed in one piece allows to limit the number of joining points between different frame 3 parts. Finally, assembling the frame 3 by securing the main frame part 10 on the cooperation surface 37 of the closing frame part 30 allows to form the first corner 6 and the second corner 8 of the frame 3 in order to keep enough space able to receive a larger amount of battery cells or modules 7. Synergistically, reducing the number of welded corner by using a U shape for the main frame part 10 allows to improve fluid tightness inside each stage and between each stage of stacked frames 3.

Referring back to figures 1 and 2, one of the frames 3 may comprises an external profile 40 disposed opposite to the floor 5 compared to said one frame 3. Said external profile 40 is intended to connect the battery holder 1 to the vehicle and/or to absorb all or part of impact energy by an external element likely to be applied to the battery holder 1. It is thus possible to protect the battery modules 7 or cells from impacts and shocks.

The arrangements described above make it possible to provide a battery holder 1 wherein each frame 3 supports a dedicated number of battery cells or modules 7, and is fixedly attached to adjacent frames 3 by the structural adhesive 9. The structural adhesive 9 is therefore used both to ensure a mechanical strength of the battery holder 1, and to ensure fluid tightness between each stacked frames 3. Thus, using a structural adhesive 9 allows to reduce the need of mechanical fasteners such as bolts which in turn reduces the manufacturing cost.

The invention also concerns a battery 100 for a transport vehicle comprising a battery holder 1 as described above, and battery cells or battery modules 7 housed in the housing 4 delimited by the floor 5, the at least two frames 3 and the lid 2. For examples, the battery modules 7 or the battery cells may be supported by the intermediate floors 5i and/ or by the at least two frames 3. By this way, each stage of the stacking of frames 3 may be assembled individually. Thus, battery parts can be assembled when the battery modules 7 are already attached to the frames 3. The manufacturing costs of the battery 100 are thus reduced.

The arrangement described above allows to provide a battery 100 for a transport vehicle showing improved fluid tightness.

## Claims

1. Battery holder (1) for a transport vehicle, the battery holder (1) comprising the successive stacking in this order of: a floor (5), at least two frames (3) and a lid (2); the floor (5), the at least two frames (3) and the lid (2) delimiting between them a housing (4) intended to receive battery modules (7) ; each frame (3) of the at least two frames (3) being fixedly attached to each adjacent frame (3) by a structural adhesive (9), said structural adhesive (9) being interposed between two adjacent frames (3) and configured to ensure mechanical fastening between said frames (3).

2. Battery holder (1) according to claim 1, wherein each frame (3) of the at least two frames (3) has a closed shape comprising a first corner (6) and a second corner (8), said frame (3) comprising:
- a main frame part (10) formed in one piece, and extending along a bending curve between a first end (13) and a second end (15), said bending curve comprising a first curved portion (14) disposed between the first end (13) and the second end (15); and
- a closing frame part (30) distinct from the main frame part (10), and extending along a lateral direction (Y) between a primary end portion (33) and a secondary end portion (35), the closing frame part (30) presenting externally a cooperation surface (37);
the first end (13) of the main frame part (10) leaning on the cooperation surface (37) and being secured to the cooperation surface (37) at the primary end portion (33) of the closing frame part (30) so as to form the first corner (6) of the closed shape of the frame (3), and the second end (15) of the main frame part (10) leaning on the cooperation surface (37) and being secured to the cooperation surface (37) of the closing frame part (30) at the secondary end portion (35) so as to form the second corner (8) of the closed shape of the frame (3), the arrangement constituted by the main frame part (10) and the closing frame part (30) assembled together forming said closed shape of the frame (3).

3. Battery holder (1) according to any one of claims 1 or 2, wherein one of the frames (3) comprises an external profile (40) disposed opposite to the floor (5) compared to said one frame (3), said external profile (40) being intended to connect the battery holder (1) to the vehicle and/or to absorb all or part of impact energy by an external element likely to be applied to the battery holder (1).

4. Battery holder (1) according to any one of claims 1 to 3, wherein the at least two frames (3) comprises at least one profile, and more particularly, at least one extruded profile.

5. Battery holder (1) according to claim 4, wherein said profile comprises aluminum, or aluminum alloy.

6. Battery holder (1) according to any one of claims 1 to 5, wherein at least one frame (3) among the at least two frames (3) comprises at least one cross member (50) extending along a lateral direction (Y) and securing two opposite sides of said at least one frame (3).

7. Battery holder (1) according to claim 6, wherein each frame (3) comprises at least one cross member (50), and wherein each cross member (50) is arranged in line with a cross member (50) of another frame (3) along a vertical direction, the structural adhesive (9) being disposed between the cross members (50) arranged in line.

8. Battery holder (1) according to any one of claims 6 or 7, wherein the cross member (50) comprises fixing holes (51) provided through the cross member (50) and configured to allow the fixing of the lid (2) with the floor (5) by fixing rods (11), through the stacked frames (3).

9. Battery holder (1) according to any one of claims 1 to 8, comprising at least one intermediate floor (5i) interposed between two adjacent stacked frames (3).

10. Battery (100) for a transport vehicle comprising a battery holder (1) according to any one of claims 1 to 9, and battery cells or battery modules (7) housed in the housing (4) delimited by the floor (5), the at least two frames (3) and the lid (2).

11. Battery (100) according to claim 10, wherein each frame (3) of the at least two frames (3) supports a part of the battery cells or the battery modules (7).
